# EUROPÄISCHE PATENTSCHRIFT

(11) **EP 2 389 719 B1**
(45) Veröffentlichungstag und Bekanntmachung des Hinweises auf die Patenterteilung: **22.08.2012**
(21) Anmeldenummer: 10793143.8
(22) Anmeldetag: 10.11.2010
(51) Int. Cl.: H02K 3/24, H02K 3/50, H02K 9/00

(54) **ROTOR EINES ELEKTRISCHEN GENERATORS FÜR DIE STROMGEWINNUNG IN KRAFTWERKEN**
ROTOR OF AN ELECTRIC GENERATOR FOR GENERATING ELECTRICITY IN POWER PLANTS
ROTOR D'UN GÉNÉRATEUR ÉLECTRIQUE POUR LA PRODUCTION DE COURANT DANS DES CENTRALES ÉLECTRIQUES

(30) Priorität: 18.12.2009 DE 102009058830
(43) Veröffentlichungstag der Anmeldung: 30.11.2011
(73) Patentinhaber: Sensoplan Aktiengesellschaft, 79801 Hohentengen (DE)
(72) Erfinder: SCHUBERT, Johann, A-8042 Graz (AT)
(74) Vertreter: Goy, Wolfgang
(86) Internationale Anmeldenummer: PCT/DE2010/001309
(87) Internationale Veröffentlichungsnummer: WO 2011/072630

(56) Entgegenhaltungen:
- JP-A- 9 322 454
- US-A1- 2005 127 779

## Beschreibung

Die Erfindung betrifft einen Rotor eines elektrischen Generators für die Stromgewinnung in Kraftwerken nach dem Oberbegriff des Anspruchs 1; die Erfindung betrifft ferner ein Verfahren zum Sanieren des Wickelkopfes eines Rotors eines elektrischen Generators für die Stromgewinnung in Kraftwerken nach dem Oberbegriff des Anspruchs 9.

Elektrische Generatoren für die Stromgewinnung in Kraftwerken weisen einen Rotor auf. Dieser Rotor besitzt zunächst eine Welle. Auf dieser Welle sind die beiden Pole des Rotors angeordnet. Diese besitzen jeweils eine Wicklung aus mehreren Spulen, wobei jede Spule wiederum aus mehreren Windungen besteht. Diese Windungen sind durch elektrische Leiter aus Kupfer gebildet, die in Nuten eingebettet sind. Dabei erstrecken sich die Leiter zwischen den beiden Wickelköpfen parallel zur Welle. In den Wickelköpfe verlaufen die Leiter bezüglich der Wellenachse kreisbogenförmig. Dabei sind im Bereich dieser Wickelköpfe zwischen den Leitern flache, plattenförmige Abstützelemente aus einem Isolationsmaterial, insbesondere glasfaserverstärktem Kunststoff angeordnet. Diese Abstützelemente besitzen auf ihren beiden, den gegenüberliegenden Leitern zugewandten Oberseiten jeweils überstehende Abstandhalter. An diesen liegen die Leiter an. Diese Abstandhalter sind im Wesentlichen dreieckig ausgebildet und ragen von den Umfangskanten der Abstützelemente abwechselnd radial nach innen sowie radial nach außen.

Während des Betriebs des Generators fließt durch die Leiter ein elektrischer Strom. Diese elektrischen Ströme sind vergleichsweise hoch und verursachen eine entsprechend starke Erwärmung. Dies vermindert die Lebensdauer sowie die Laufleistung. Aus diesem Grunde werden die Leiter im Rotor, insbesondere auch in den beiden Wickelköpfen mittels eines Kühlmediums, insbesondere Luft oder Wasserstoff, gekühlt. Der Zwischenabstandsbereich zwischen den Leitern und den Abstützelementen definiert dabei den Kühlkanal. Die Höhe dieses Kühlkanals ist durch die Dicke der überstehenden Abstandhalter vorgegeben.

Die Zuführung des Kühlmediums erfolgt dabei in einem Spalt zwischen dem Außendurchmesser der Welle und dem Innendurchmesser einer Rotorkappenplatte, welche den Wickelkopf in axialer Richtung einschließt. Die vom Wickelkopf erwärmte Luft oder Wasserstoff strömt beispielsweise durch Nuten im Polbereich bzw. Bohrungen in den Rotorzähnen am Außendurchmesser des Rotorballens in den Luftspalt des Generators aus. Treibende Kraft für die Strömung ist vor allem der Druckunterschied aufgrund des Durchmesserunterschieds am Eintritt der Kaltluft und Austritt der Warmluft (sogenannte Eigenförderung des Rotors).

Am Innendurchmesser des Wickelkopfes befindet sich ein Kühlmediumleitmantel mit ovalförmigen Öffnungen, die jeweils unter den 90°-Bögen zwischen zwei Spulen angeordnet sind. Durch diese Öffnungen gelangt das Kühlmedium in die in axialer sowie in tangentialer Richtung verlaufende Zwischenräume zwischen zwei Spulen. Die Breite der Zwischenräume ist dabei festgelegt durch die vorerwähnten Abstützelemente in Form von Abstützsegmenten. Es handelt sich hier um kreisförmige Bogensegmente mit den darauf angeordneten Abstandhaltern. Diese Abstützsegmente sorgen für einen festen Sitz der Spulen und verhindern deren Relativbewegung. Gleichzeitig dienen die Abstützungssegmente mit den darauf befindlichen Abstandhaltern als Kühlkanäle für das Kühlmedium.

Das Kühlmedium durchströmt dabei die Zwischenräume entlang wellenförmiger Linien (die durch die Anordnung von den dreieckförmigen Abstandhaltern vorgegeben sind) in Umfangsrichtung und tritt dann in Polmitte in die Warmgaskammer ein. Von dort gelangt das erwärmte Kühlmedium durch zwei Nuten im Polbereich in den Luftspalt des Generators und wird von dort durch entsprechende Kanäle im Blechpaket zurück zum Generatorkühler geführt. Ein anderer Teil des Kühlmediums wird nach Eintritt in den Wickelkopf in axialer Richtung geführt, ebenfalls vorbei an den dreieckförmigen Abstandhaltern entlang einer wellenförmigen Kontur. Das Kühlmedium tritt schließlich durch Bohrungen in den Rotorzähnen in den Luftspalt aus.

Aufgrund der ungünstigen wellenförmigen Führung der Kühlluft um die dreieckförmigen Abstandhalter herum zwischen den Spulen in axialer sowie in tangentialer Richtung werden große Totgebiete verursacht und damit große, nicht von dem Kühlmedium überströmte Flächenbereiche. Da die Wärmeabfuhr proportional zur Oberfläche ist, ergibt sich dadurch eine geringe Wärmeabfuhr. Die Folge davon ist eine erhöhte Temperatur in den Leitern.

Weiterhin entstehen durch diese wellenförmige Kühlluftführungen starke Gradienten im Geschwindigkeitsprofil. Die Folge davon ist, daß der von der Kühlluftgeschwindigkeit abhängige Wärmeübertragungskoeffizient stark variiert. Es entstehen Gebiete mit guter und mit schlechter Wärmeabfuhr und damit ungleichmäßiger Temperatur. Folge von Temperaturgradienten sind thermische Spannungen in den Leitern und damit Anlaß für Laufunruhe des Rotors.

Weiterhin behindert eine ungünstige Dimensionierung der Dicke der Abstützelemente die ausreichende Versorgung mit Kühlluft. Die Dicke der Abstützelemente ergibt sich aus der Dicke der tragenden Platten und der Tiefe der Kühlkanäle. Diese sind gleich groß wie die Dicke der Strömungsumlenkelemente. Die Erwärmung der überhängenden Spulenköpfe steigt mit zunehmender Spulengröße. Denn größere Bügellängen in tangentialer Richtung und in axialer Richtung haben längere Leiter und damit höhere Verluste, da der Widerstand proportional zur Länge zunimmt. Trotzdem sind in den bestehenden Konstruktionen die Tiefe der Kühlkanäle für alle Spulen in axialer Richtung gleich groß. Dies benachteiligt die größeren Spulen.

In mechanischer Hinsicht haben die bekannten Abstützelemente ebenfalls Schwächen. Die großen Abstände zwischen den Umlenkelementen machen die Abstützungen biegeweich. Ferner sind die Umlenkelemente in axialer/tangentialer Richtung versetzt angeordnet. Dadurch entsteht eine anisotrope Steifigkeit der Wickelkopfabstützung. Diese ungünstige Abstützung der Spulen gibt Anlaß zu Bewegungen im Wickelkopf im Betrieb und damit Laufunruhe des Rotors.

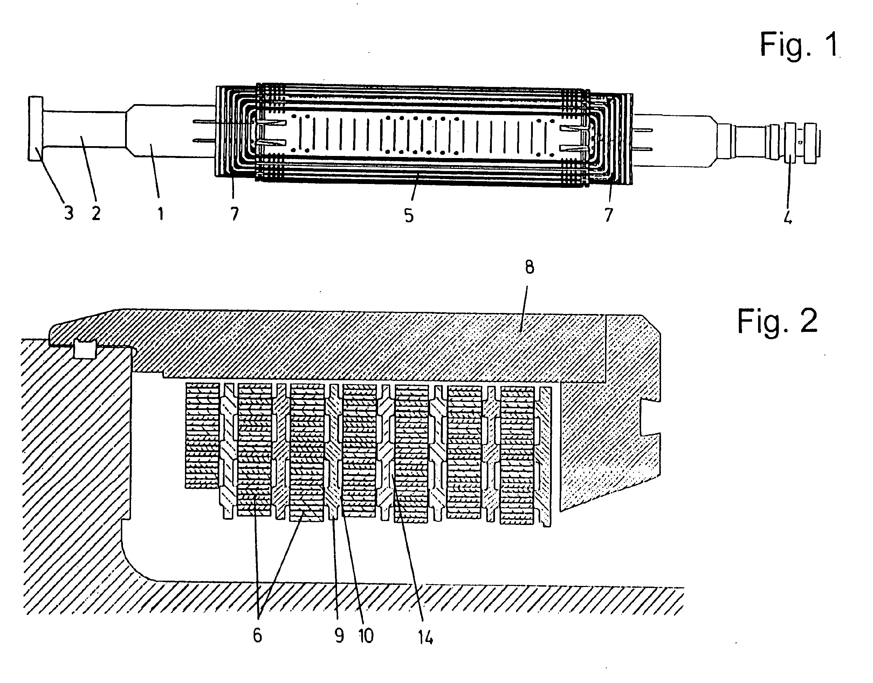

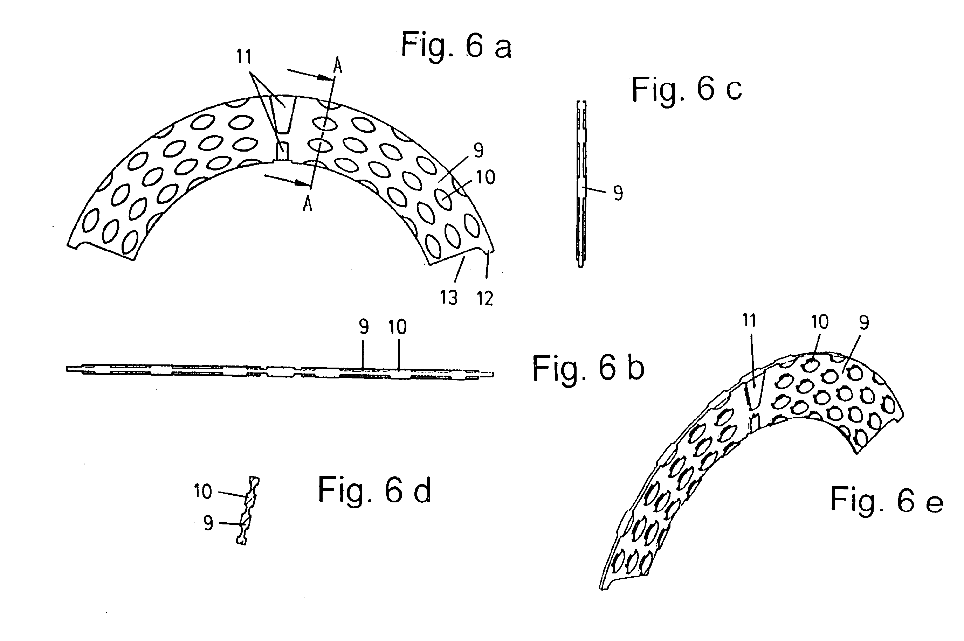

Die JP 9 322 454 A zeigt einen Rotor eines elektrischen Generators der eingangs angegebenen Art, bei dem sich zwischen den Leitern des Rotors Abstützelemente befinden. Während bei den Ausführungsformen der Fig. 1 bis 4 die dort gezeigten Abstandhalter der Abstützelemente dreieckig ausgebildet sind und von den Umfangskanten der Abstützelemente abwechselnd nach innen ragen, zeigt Fig. 6 Abstandhalter, welche inselförmig ausgebildet sind.

Die US 2005/0 127 779 A1 zeigt für den Rotor eines elektrischen Generators Abstützelemente mit Abstandhaltern welche schlangenförmig ausgebildet sind.

Der Erfindung liegt die A u f g a b e zugrunde, einen Rotor eines elektrischen Generators für die Stromgewinnung in Kraftwerken der eingangs angegebenen Art mit einer verbesserten Kühlung in den Wickelköpfen hinsichtlich der Anordnung der Abstandhalter auf den Abstützelementen zu schaffen.

Die technische **Lösung** ist gekennzeichnet durch die Merkmale im Kennzeichen des Anspruchs 1.

Dadurch ist eine Verbesserung der Wickelkopfkühlung von Generatorrotoren mit indirekt gekühlter Rotorwicklung geschaffen. Das Ausgangskonzept, daß die Abstützung der Spulen einerseits und die Kühlmediumführung andererseits durch ein und dasselbe Bauteil, nämlich durch die Abstützelemente bewerkstelligt wird, wird beibehalten. Allerdings werden durch die erfindungsgemäße Ausbildung sowie Anordnung der Abstandhalter Verbesserungen erzielt. So werden die sogenannten Totwassergebiete (nicht mit der Kühlluft überströmte Bereiche im Rotorwickelkopf) durch die strömungsoptimierte Gestaltung der in den Abstützelementen integrierten Kühlkanäle vermieden. Daraus resultiert eine bessere Wärmeabfuhr und homogenere Temperaturverteilung in der Wicklung aufgrund einer insgesamt größeren, überströmten Fläche durch diese Vermeidung dieser Totwassergebiete. Ein gleichmäßiger Abstand der Abstandhalter sorgt für eine unterbrechungsfreie und vollständige Durchströmung der Kühlkanäle. Schließlich resultiert ein gleichmäßiges Geschwindigkeitsprofil, das für eine kontinuierliche und gute Wärmeübertragung sorgt. Die Abstandhalter bilden dabei nur einen geringen Strömungswiderstand für das Kühlmedium. In mechanischer Hinsicht sind die Abstützelemente steif und nahezu isotrop, da die Abstände zwischen den Abstandhaltern kleiner sind als bisher und alle Elemente in axialer Richtung ausgerichtet sind.

Außer den inselförmigen Abstandhaltern der zuvor beschriebenen Art können gemäß der Weiterbildung in Anspruch 2 auch von den Rändern der Abstützelemente halbinselförmige Abstandhalter in die Fläche der Abstützelemente hineinragen. Dies bedeutet, daß die Abstandhalter die gesamte Fläche der Abstützelemente bis hin zum Rand abdecken. Die halbinselförmigen Abstandhalter bilden dabei nur einen geringen Strömungswiderstand für das Kühlmedium.

Vorzugsweise haben dabei gemäß der Weiterbildung in Anspruch 3 die Abstandhalter in Strömungsrichtung des Kühlmediums gesehen eine größere Ausdehnung als in Querrichtung. Dadurch ist eine strömungslinienförmige Gestaltung geschaffen.

Eine weitere Weiterbildung schlägt gemäß Anspruch 4 vor, daß entgegen der Strömungsrichtung gesehen die Abstandhalter in einer Spitze münden. Dies bedeutet, daß das Kühlmedium auf eine Spitze trifft, welche von der Widerstandsfläche her äußerst gering ist. Dadurch wird der Strömungswiderstand weiter reduziert.

Gemäß der Weiterbildung in Anspruch 5 sind die Abstandhalter vorzugsweise oval ausgebildet. Andere stromlinienförmige Profile sind denkbar.

Die Weiterbildung gemäß Anspruch 6 mit der versetzten Anordnung der Abstandhalter hat den Vorteil, daß bei sämtlichen Leitern gewährleistet ist, daß diese an den Abstandhaltern der Abstützelemente anliegen, und nicht an der Bodenfläche der Abstützelemente.

Die Weiterbildung gemäß Anspruch 7 hat den Vorteil einer effektiven Führung der Kühlluft. Denn die Barrieren in der Mitte dienen zur Abfuhr der Warmluft in die innen liegende Warmluftsammelkammer. Es gelangt durch den größeren Ausschnitt mehr Kühlmedium zu den radial außen liegenden Leitern, da diese thermisch höher belastet sind.

Eine weitere Weiterbildung schlägt gemäß Anspruch 8 vor, daß die Höhe der Kühlkanäle zu den äußeren Spulen mit den längeren Tangentialbügeln hin zunimmt. Dadurch wird mehr Kühlluft an die Stellen mit höherer thermischer Belastung und weniger Kühlluft an die Stellen mit geringerer thermischer Belastung gefördert. Dabei können darüber hinaus bei einer Neuwicklung mit neuen Leitern zusätzlich auch die Spulenabstände variiert und der zuvor beschriebene Effekt verstärkt werden.

Die erfindungsgemäße Ausbildung der Abstandhalter an den Abstützelementen kann für neue Generatoren zur Anwendung gebracht werden. Gemäß Anspruch 9 kann jedoch auch vorgesehen sein, daß beim Sanieren des Wickelkopfes eines Rotors eines elektrischen Generators für die Stromgewinnung in Kraftwerken die alten, bekannten Abstützelemente durch die erfindungsgemäßen Abstützelemente mit den speziellen Abstandhaltern ersetzt werden.

Die Weiterbildung hiervon gemäß Anspruch 10 schlägt dabei zusätzlich vor, daß bei einer Neuwicklung mit neuen Leitern zusätzlich auch die Spulenabstände variiert werden. Dadurch kann der beschriebene Effekt hinsichtlich der Kühlleistung verstärkt werden.

Ein Ausführungsbeispiel eines erfindungsgemäßen Rotors eines elektrischen Generators für die Stromgewinnung in Kraftwerken wird nachfolgend anhand der Zeichnungen beschrieben. In diesen zeigt:
- Fig. 1: eine Gesamtansicht eines Rotors eines 2-poligen Generators;
- Fig. 2: einen Schnitt durch den Wickelkopf mit der erfindungsgemäßen Abstützung;
- Fig.3: eine perspektivische schematische Darstellung des Wickelkopfes;
- Fig. 4: eine Darstellung entsprechend der in Fig. 3, jedoch ohne die Wicklung;
- Fig. 5a: eine Draufsicht auf den Wickelkopf in Fig. 3;
- Fig. 5b: ein Detailausschnitt aus Fig. 5a;
- Fig. 6a: eine Ansicht eines Abstützelements mit den erfindungsgemäßen Abstandhaltern;
- Fig. 6b: eine Draufsicht auf das Abstützelement in Fig. 6a;
- Fig. 6c: eine Stirnansicht des Abstützelements in Fig. 6a;
- Fig. 6d: einen Schnitt entlang der Linie A-A in Fig. 6a;
- Fig. 6e: eine perspektivische Ansicht des Abstützelements;
- Fig. 7: eine schematische Darstellung der Strömung um die Abstandhalter der Abstützelemente herum.

Fig. 1 zeigt den Rotor eines 2-poligen Generators in seiner Gesamtheit. Der Rotor weist dabei eine Welle 1 auf. Diese besitzt am einen Ende ein Lager 2 sowie eine Kupplung 3 zur Turbine und am anderen Ende Schleifringe 4. Im mittleren Bereich befindet sich der Rotorballen mit der Rotorwicklung 5 bestehend aus einzelnen Leitern 6. Die beiden Enden der Rotorwicklung 5 bilden die Wickelköpfe 7. Wie zusätzlich in Fig. 2 erkennbar ist, sind die Wickelköpfe 7 durch eine Rotorkappe 8 abgedeckt.

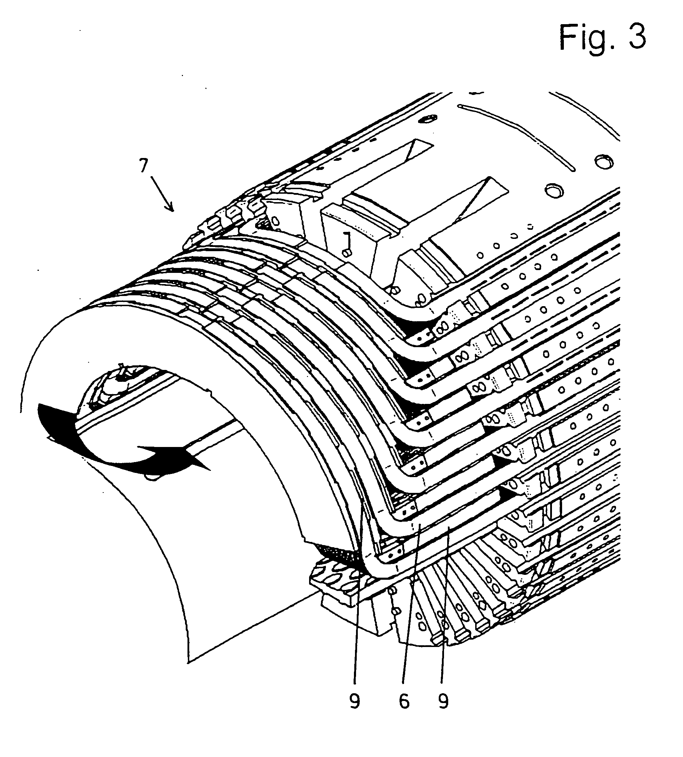

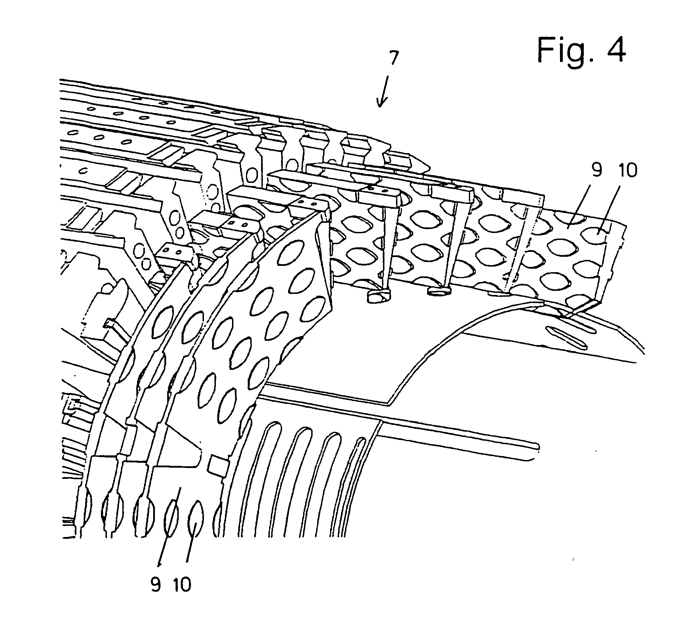

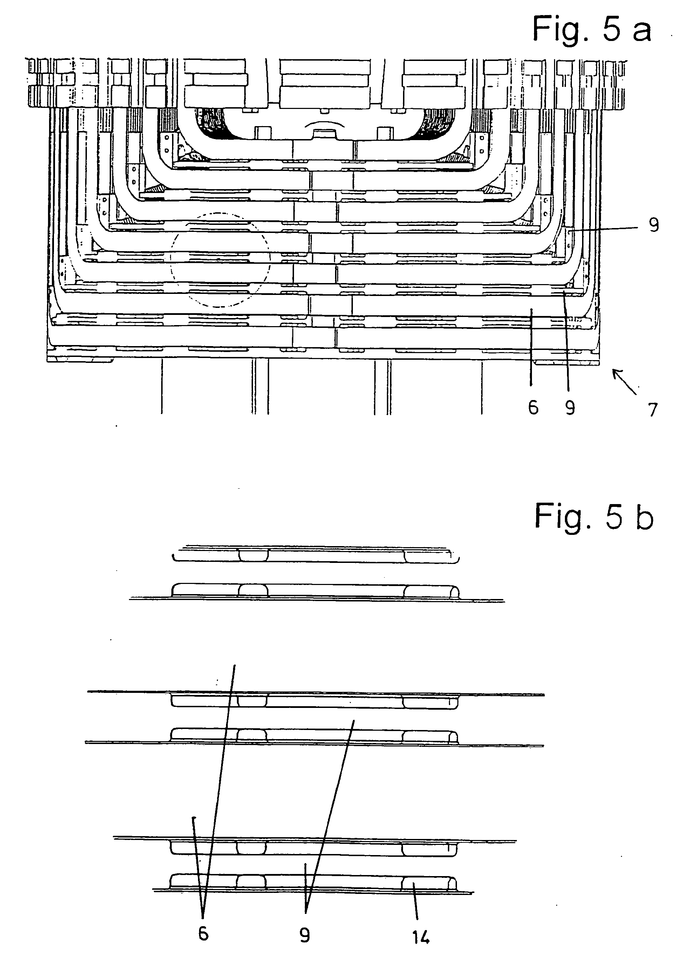

Wie in den Fig. 3 bis Fig. 5 detaillierter erkennbar ist, sind die Leiter 6 im Bereich des Wikkelkopfes 7 bezüglich der Achse der Welle 1 zunächst geradlinig koaxial, anschließend kreisbogenförmig konzentrisch und schließlich wieder geradlinig koaxial geführt. Sowohl im geraden Bereich als auch im kreisbogenförmigen Bereich der Leiter 6 befinden sich zwischen diesen - im allgemeinsten Sinne gesehen - plattenförmige, flache Abstützelemente 9 aus glasfaserverstärktem Kunststoff oder einem anderen Isolationsmaterial. Wie insbesondere in Fig. 4 erkennbar sind, sind diese im kreisbogenförmigen Bereich als Ringsegmente ausgebildet, während sie im Axialbereich als keilförmige Platten ausgebildet sind.

Die Besonderheit bei diesen Abstützelementen 9 sind die auf beiden Seiten angeordneten Abstandhalter 10, wie sie insbesondere auch in Fig. 6a bis Fig. 6e dargestellt sind. Diese Abstandhalter 10 sind im Ausführungsbeispiel strömlinienförmig oval ausgebildet. Sie sind dabei über die gesamte Fläche des Abstützelements 9 gleichmäßig verteilt angeordnet. Dabei sind die Abstandhalter 10 längs des Kühlmittelweges darüber hinaus versetzt zueinander angeordnet.

In der Mitte befinden sich noch Barrieren 11. Endseitig sind bis auf eine Zentriernase 12 Ausnehmungen 13 vorgesehen.

Die Funktionsweise ist wie folgt:
Die Leiter 6 liegen an den Abstandhaltern 10 der Abstützelemente 9 an. Da diese Abstandhalter 10 über die Grundfläche der Abstützelemente 9 ragen, ist im Zwischenbereich zwischen den Leitern 6 und den Abstützelementen 9 im Bereich dieser Grundfläche jeweils ein Kühlkanal 14 definiert.

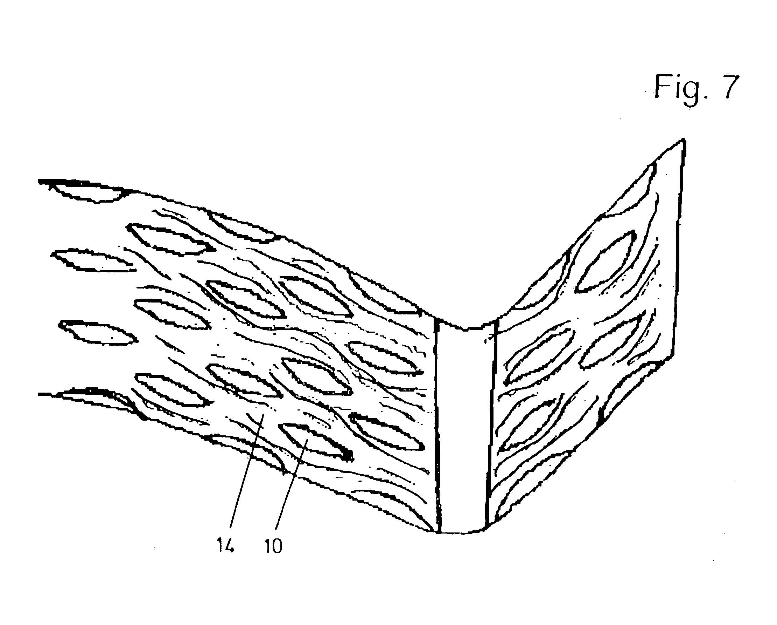

Das Kühlmedium, insbesondere Kühlluft oder Wasserstoff, wird dem Wickelkopf 7 zugeführt, wie dies in Fig. 3 durch den Pfeil angedeutet ist. Das Kühlmedium strömt dann entlang der Kühlkanäle 14, wie dies rein schematisch in Fig. 7 angedeutet ist. Die fischförmigen Abstandhalter 10 für die Leiter 6 werden dabei von dem Kühlmedium stromlinienförmig umströmt und nehmen dabei die in den Leitern 6 entstandene Wärme auf. Nach Passieren der Kühlkanäle 14 wird dann das erwärmte Kühlmedium aus dem Wickelkopf 7 ausgeleitet.

### Bezugszeichenliste

- 1: Welle
- 2: Lager
- 3: Kupplung
- 4: Schleifring
- 5: Rotonivicklung
- 6: Leiter
- 7: Wickelkopf
- 8: Rotorkappe
- 9: Abstützelement
- 10: Abstandhalter
- 11: Barriere
- 12: Zentriernase
- 13: Ausnehmung
- 14: Kühlkanal

## Patentansprüche

1. Rotor eines elektrischen Generators für die Stromgewinnung in Kraftwerken,
mit einer Welle (1),
mit auf der Welle (1) angeordneten, eine Wicklung aus Spulen definierenden Leitern (6), mit im Bereich des Wickelkopfes (7) zwischen parallel benachbarten Leitern (6) angeordneten, plattenförmigen Abstützelementen (9) aus einem elektrischen lsolationsmaterial, die auf ihren beiden, den Leitern (6) zugewandten Oberseiten überstehende, inselförmige Abstandhalter (10) aufweisen, sowie
mit einer Zuführung sowie einer Abführung für ein Kühlmedium, wobei die Abstandsbereiche zwischen den Leitern (6) und den Abstützelementen (9) Kühlkanäle (14) definieren,
**dadurch gekennzeichnet,**
**daß** die in Strömungsrichtung des Kühlmediums gesehen stromlinienförmigen Abstandhalter (10) über die gesamte Fläche der Abstützelemente (9) gleichmäßig verteilt sowie in Reihen zueinander querversetzt angeordnet sind.

2. Rotor nach dem vorhergehenden Anspruch,
**dadurch gekennzeichnet,**
**daß** von den Rändern der Abstützelemente (9) halbinselförmige Abstandhalter (10) in die Fläche der Abstützelemente (9) hineinragen, welche in Strömungsrichtung des Kühlmediums gesehen stromlinienförmig ausgebildet sind.

3. Rotor nach einem der vorhergehenden Ansprüche,
**dadurch gekennzeichnet,**
**daß** in Strömungsrichtung des Kühlmediums gesehen die Abstandhalter (10) eine größere Ausdehnung haben als in Querrichtung.

4. Rotor nach einem der vorhergehenden Ansprüche,
**dadurch gekennzeichnet,**
**daß** die Abstandhalter (10) entgegen der Strömung des Kühlmediums gesehen eine Spitze aufweisen.

5. Rotor nach einem der vorhergehenden Ansprüche,
**dadurch gekennzeichnet,**
**daß** die Abstandhalter (10) eine ovale Form aufweisen.

6. Rotor nach einem der vorhergehenden Ansprüche,
**dadurch gekennzeichnet,**
**daß** die Abstandhalter (10) längs der Strömungsrichtung des Kühlmediums derart versetzt zueinander angeordnet sind,
**daß** die Leiter (6) immer bereichsweise an den Abstandhaltern (10) anliegen.

7. Rotor nach einem der vorhergehenden Ansprüche,
**dadurch gekennzeichnet,**
**daß** die als Abstützsegmente ausgebildeten Abstützelemente (9) an den in Umfangsrichtung liegenden Rändern bis auf ein kurzes, die Zentrierung der Lage dienende Zentriernase (12) eine Ausnehmung (13) aufweisen.

8. Rotor nach einem der vorhergehenden Ansprüche,
**dadurch gekennzeichnet,**
**daß** bei den als Abstützsegmente ausgebildeten Abstützelementen (9) die Höhe der Kühlkanäle (14) zu den äußeren Spulen mit den längeren Tangentialbügeln hin zunimmt.

9. Verfahren zum Sanieren des Wickelkopfes (7) eines Rotors eines elektrischen Generators für die Stromgewinnung in Kraftwerken,
wobei der Rotor
mit einer Welle (1),
mit auf der Welle (1) angeordneten, eine Wicklung aus Spulen definierenden Leitern (6),
mit im Bereich des Wickelkopfes (7) zwischen parallel benachbarten Leitern (6) angeordneten, plattenförmigen Abstützelementen (9) aus einem elektrischen lsolationsmaterial, die auf ihren beiden, den Leitern (6) zugewandten Oberseiten überstehende Abstandhalter (10) aufweisen, sowie
mit einer Zuführung sowie einer Abführung für ein Kühlmedium, wobei die Abstandsbereiche zwischen den Leitern (6) und den Abstützelementen (9) einen Kühlkanäle (14) definieren
ausgestattet ist,
**dadurch gekennzeichnet,**
**daß** die bestehenden Abstützelemente (9) durch Abstützelemente (9) gemäß den Ansprüchen 1 bis 8 ersetzt werden.

10. Verfahren nach Anspruch 9,
**dadurch gekennzeichnet,**
**daß** bei einer zusätzlichen Neuwicklung der Leiter (6) zusätzlich die Spulenabstände verändert werden.

## Claims

1. Rotor of an electrical generator for generating electricity in power stations, with a shaft (1),
with conductors (6) arranged on the shaft (1) and defining a winding of coils, with plate-like supporting elements (9) which are arranged in the region of the winding head (7) between parallel adjacent conductors (6), are made of an electrical insulating material and on their two top sides facing the conductors (6) have protruding island-shaped spacers (10), and
with a supply and a discharge for a coolant medium, wherein the space regions between the conductors (6) and the supporting elements (9) define cooling channels,
**characterised in that**
the spacers (10) which are streamlined viewed in the flow direction of the coolant are evenly distributed over the entire surface of the supporting elements (9) and arranged transversely offset to each other in rows.

2. Rotor according to the preceding claim, **characterised in that** peninsularshaped spacers (10) protrude from the edges of the supporting elements (9) into the surface of the supporting elements (9) and are formed streamlined viewed in the flow direction of the coolant.

3. Rotor according to any of the preceding claims, **characterised in that**, viewed in the flow direction of the coolant, the spacers (10) have a greater extension than in the transverse direction.

4. Rotor according to any of the preceding claims, **characterised in that** the spacers (10) have a tip viewed against the flow direction of the coolant.

5. Rotor according to any of the preceding claims, **characterised in that** the spacers (10) have an oval form.

6. Rotor according to any of the preceding claims, **characterised in that** the spacers (10) are arranged offset to each other along the flow direction of the coolant such that the conductors (6) always lie against the spacers (10) in regions.

7. Rotor according to any of the preceding claims, **characterised in that** the supporting elements (9) formed as supporting segments, on the edges lying in the peripheral direction, have a recess (13) except for a short centring lug (12) serving to centre their position.

8. Rotor according to any of the preceding claims, **characterised in that** with the supporting elements (9) formed as supporting segments, the height of the cooling channels (14) increases towards the outer coils with the longer tangential shackles.

9. Method for modifying the winding head (7) of a rotor of an electrical generator for generating electricity in power stations, wherein the rotor is fitted with a shaft (1),
with conductors (6) arranged on the shaft (1) and defining a winding of coils, with plate-like supporting elements (9) which are arranged in the region of the winding head (7) between parallel adjacent conductors (6), are made of an electrical insulating material and on their two top sides facing the conductors (6) have protruding island-shaped spacers (10), and
with a supply and a discharge for a coolant medium, wherein the space regions between the conductors (6) and the supporting elements (9) define cooling channels,
**characterised in that**
the existing supporting elements (9) are replaced by supporting elements (9) according to claims 1 to 8.

10. Method according to claim 9, **characterised in that** on an additional rewinding of the conductors (6), the coil spacing is also changed.

## Revendications

1. Rotor d'un générateur électrique pour la production de courant dans des centrales électriques,
avec un arbre (1),
avec des conducteurs (6) disposés sur l'arbre (1) qui définissent un enroulement composé de bobines,
avec des éléments de support (9) en forme de plaque, composés d'un matériau électriquement isolant, disposés dans la zone de la tête d'enroulement (7) entre des conducteurs (6) parallèles adjacents, qui présentent de leurs deux côtés supérieurs tournés vers les conducteurs (6) des entretoises (10) en saillie en forme d'île, et avec une arrivée ainsi qu'un départ pour un fluide de refroidissement, les zones d'écartement entre les conducteurs (6) et les éléments de support (9) définissant des canaux de refroidissement (14),
**caractérisé en ce**
**que** les entretoises (10) de forme hydrodynamique vues dans la direction d'écoulement du fluide de refroidissement sont réparties régulièrement sur toute la surface des éléments de support (9) ainsi que disposées en rangées et décalées transversalement les unes par rapport aux autres.

2. Rotor selon la revendication précédente,
**caractérisé en ce**
**que** des entretoises (10) en forme de presqu'île pénètrent depuis les bords des éléments de support (9) dans la surface des éléments de support (9), lesquelles sont réalisées avec une forme hydrodynamique vues dans la direction d'écoulement du fluide de refroidissement.

3. Rotor selon une des revendications précédentes,
**caractérisé en ce**
**que** vue dans la direction d'écoulement du fluide de refroidissement, les entretoises (10) ont une plus grande extension qu'en direction transversale.

4. Rotor selon une des revendications précédentes,
**caractérisé en ce**
**que** vues en sens inverse de l'écoulement du fluide de refroidissement, les entretoises (10) présentent une pointe.

5. Rotor selon une des revendications précédentes,
**caractérisé en ce**
**que** les entretoises (10) présentent une forme ovale.

6. Rotor selon une des revendications précédents,
**caractérisé en ce**
**que** les entretoises (10) sont décalées les unes par rapport aux autres dans la direction d'écoulement du fluide de refroidissement, de telle manière que les conducteurs (6) reposent toujours en partie sur les entretoises (10).

7. Rotor selon une des revendications précédentes,
**caractérisé en ce**
**que** les éléments de support (9) réalisés sous la forme de segments de support présentent un évidement (13) aux bords situés en direction circonférentielle, à l'exception d'un court nez de centrage (12) servant à centrer la position.

8. Rotor selon une des revendications précédentes,
**caractérisé en ce**
**que** sur les éléments de support (9) réalisés sous la forme de segments de support, la hauteur des canaux de refroidissement (14) augmente en direction des bobines extérieures présentant les brides tangentielles les plus longues.

9. Procédé de rénovation de la tête d'enroulement (7) d'un rotor d'un générateur électrique pour la production de courant dans des centrales électriques,
dans lequel le rotor est équipé
d'un arbre (1),
de conducteurs (6) disposés sur l'arbre (1) qui définissent un enroulement composé de bobines,
d'éléments de support (9) en forme de plaque, composés d'un matériau électriquement isolant, disposés dans la zone de la tête d'enroulement (7) entre des conducteurs (6) parallèles adjacents, qui présentent de leurs deux côtés supérieurs tournés vers les conducteurs (6) des entretoises (10) en saillie, et
d'une arrivée ainsi que d'un départ pour un fluide de refroidissement, les zones d'écartement entre les conducteurs (6) et les éléments de support (9) définissant des canaux de refroidissement (14),
**caractérisé en ce**
**que** les éléments de support (9) existants sont remplacés par des éléments de support (9) selon les revendications 1 à 8.

10. Procédé selon la revendication 9,
**caractérisé en ce**
**que** dans le cas d'un rebobinage supplémentaire des conducteurs (6), on modifie également les écartements entre bobines.
